# EUROPÄISCHE PATENTSCHRIFT

(11) **EP 2 409 792 B1**
(45) Veröffentlichungstag und Bekanntmachung des Hinweises auf die Patenterteilung: **05.12.2012**
(21) Anmeldenummer: 10007693.4
(22) Anmeldetag: 23.07.2010
(51) Int. Cl.: B21D 19/00, B21D 28/06, B21L 9/04, B21L 15/00, F16G 13/04

(54) **Herstellverfahren für Kettenlaschen**
Method for producing chain links
Procédé de fabrication de maillons de chaîne

(43) Veröffentlichungstag der Anmeldung: 25.01.2012
(73) Patentinhaber: iwis motorsysteme GmbH & Co. KG, 81369 München (DE)
(72) Erfinder: Belmer, Stefan, 85646 Anzing (DE); Koschig, Richard, 85354 Freising (DE)
(74) Vertreter: Grünecker, Kinkeldey, Stockmair & Schwanhäusser

(56) Entgegenhaltungen:
- EP-A1- 1 793 016
- DE-A1-102004 021 695
- GB-A- 2 419 931

## Beschreibung

Die vorliegende Erfindung betrifft ein Herstellverfahren für Kettenlaschen mit einem Stanzen der Kettenlaschen. Des Weiteren betrifft die Erfindung Kettenlaschen, die mit einem entsprechenden Verfahren hergestellt sind.

Kettenlaschen für herkömmliche Gelenk- oder Hülsenketten aber auch für geräuscharme Zahnketten, die insbesondere als Antriebsketten in Verbrennungsmotoren eingesetzt werden, werden im Stand der Technik üblicherweise in einem zweiphasigen Stanzverfahren hergestellt. Dabei werden die Gelenköffnungen sowie besonders belastete Abschnitte der Kettenlaschenkontur, z.B. die Zahnflanken von Zahnlaschen, mit einer Reihe von unterschiedlichen Stanzstempeln aus einem Stahlblech grob vorgestanzt und in einem zweiten Stanzschritt nachgeschnitten. Beim Nachschneiden wird die mit einem Aufmaß grob vorgestanzte Kontur in einem Nachschneideschnitt auf ihr Endmaß gestanzt, wodurch die geringe Spannbreite des Nachschneideschnitts einen Glattschnittbereich ermöglicht, der sich über 60 bis 85 % der Schnittfläche der ausgestanzten Kontur erstreckt. Durch das Nachschneiden der Gelenköffnungen und anderer verschleißbelasteter Konturen der Kettenlaschen, wird die Entstehung von mikroskopischen Rissen und Einschnitten über den Glattschnittbereich verhindert und der ein- und abrissfreie Glattschnittbereich der Schnittfläche signifikant erhöht, wodurch sich die Verschleißfestigkeit und Dauerbelastbarkeit der Kettenlaschen verbessern.

Ein derartiges Verfahren zum Vorstanzen und Nachschneiden von Kettenlaschen beschreibt die DE 10 2004 021 695 A1, auf der der Oberbegriff des Anspruchs 1 basiert. Dabei werden zunächst nur die nachzuschneidenden Bereiche der Gelenköffnungen sowie der Zahnlaschenkontur aus einem Stahlblech ausgestanzt, so dass die grob vorgestanzte Lasche in den gebogenen Stirnseitenbereichen weiterhin fest mit dem Stahlblech verbunden ist. Danach werden zur Verbesserung der Positionierung des Stahlblechs und der Parallelität der nachgeschnittenen Oberflächen im zweiten Arbeitsschritt in umgekehrter Reihenfolge und Stanzrichtung zunächst alle nachzuschneidenden Abschnitte der Kettenlaschenkontur durch Nachschneiden auf ihr Endmaß gestanzt, bevor die Kettenlasche an den gebogenen Stirnseitenbereichen durch ein Aus- oder Freistanzen endgültig aus dem Stahlblech herausgetrennt wird. Die GB 2 419 931 A offenbart ein Herstellverfahren für Zahnlaschen die aus einem Kohlenstoffstahlblech ausgestanzt und vor einer Wärmebehandlung mittels Trommelpolieren poliert werden, um so eine geringe Oberflächenrauhigkeit zu ermöglichen.

Eine weitere Möglichkeit die Schnittfläche der ausgestanzten Kontur hinsichtlich der Verschleißfestigkeit und Dauerbelastbarkeit der Kettenlaschen zu verbessern, ist das Feinstanzen der Kettenlaschen. Das Feinstanzen wird insbesondere bei relativ dicken Kettenlaschen eingesetzt, wobei die Stanzgeschwindigkeit nur bei ca. 10 bis 20 % der Geschwindigkeit des normalen Pressstanzens liegt. Entsprechend sind die Herstellungskosten von Kettenlaschen im Feinstanzverfahren relativ hoch, während die Produktivität gering ist. Beim Feinstanzen von Kettenlaschen kann durch die geringe Stanzgeschwindigkeit ein Glattschnittbereich erreicht werden, der sich über 90 bis 100 % der Schnittfläche der ausgestanzten Kontur erstreckt. Nachteilig ist beim Feinstanzen jedoch, dass insbesondere beim Durchschneiden auf der sogenannten Gratseite der Kettenlasche durch das Austreten des Stanzstempels aus dem Stanzmaterial sehr viel ausgeprägtere Stanzgrate entstehen als beim Nachschneiden, sowohl in der Grathöhe als auch in der Gratfußdicke. Diese ausgeprägten Stanzgrate erfordern im Normalfall eine Nachbearbeitung feingestanzten Kettenlaschen, um die Stanzgrate zu entfernen.

Auch beim Vorstanzen und Nachschneiden von Kettenlaschen entsteht je nach Stanzrichtung des Nachschneidens auf der Gratseite der Kettenlaschen oder bei einer umgekehrten Stanzrichtung auf der Stanzeinzugsseite im Bereich des Übergangs der Seitenfläche zur gestanzten Schnittfläche eine gratige Kante an der Stanzgrate gegenüber der Schnittfläche vorstehen.

Der sich bei nachgeschnittenen oder feingestanzten Kettenlaschen an die Stanzeinzugsseite anschließende rissfreie Glattschnittbereich weist zwar eine im Wesentlichen glatte Oberfläche ohne signifikante Risse und Rissflächenbereiche auf und ermöglicht so einen breiten Tragabschnitt des Kettengelenks und anderer Eingriffsflächen, jedoch weist der Glattschnittbereich makrogeometrische Stanzriefen auf, die quer zu einer Gelenkbewegung des Kettengelenks bzw. der Eingriffsrichtung der Zähne der Zahnlaschen in Kettenrädern verlaufen.

Im Anschluss an den Glattschnittbereich ist in der Schnittfläche gestanzter Kettenlaschen üblicherweise ein Bruchbereich zu finden, der durch den Abriss des letzten Bereichs der Schnittfläche beim Stanzvorgang entsteht. Dieser Bruchbereich erstreckt sich bei nachgeschnittenen Kettenlaschen üblicherweise über 15 bis 40 % der Schnittfläche und bei feingestanzten Kettenlaschen nur auf unter 10 % der Schnittfläche. Dabei weist der Bruchbereich ein Rissflächengewebe auf, das gegenüber der Fläche des Glattschnittbereichs zurückversetzt ist. Da der Bruchbereich neben dem rauen Rissflächengewebe auch noch gegenüber dem Glattschnittbereich zurückversetzt ist, kann der Bruchbereich weder in einem Kettengelenk noch beim Eingriff in ein Kettenrad als kraft-übertragender Bereich genutzt werden. Das raue Rissflächengewebe führt außerdem zu lokalen Konzentrationen von Zugspannungen und fördert so das Entstehen von Anrissen mit einem nachfolgenden ermüdungsbedingten Dauerbruch, wodurch die Dauerfestigkeit der Kettenlasche negativ beeinflusst wird.

Bei einer abschließenden Nachbearbeitung gestanzter Kettenlaschen können die beim Stanzen entstandenen Stanzgrate auf der Gradseite der Kettenlaschen durch Gleitschleifen entfernt werden, um einen sogenannten Pseudoanfangsverschleiß zu verhindern, bei dem ein vorstehender Grat durch den Kontakt mit den Gelenkbolzen sehr schnell abgerieben wird. Der Pseudoanfangsverschleiß führt durch die punktuellen Kontakte der Laschengrate zu den Gelenkbolzen zu einer lokalen Überbelastung des Materials und damit zu Einbußen in der Bauteilfestigkeit sowie zu einem Ansammeln des Abriebs als fein abrasiver Schmiergel im Gelenk. Die beim Gleitschleifen verwendeten Gleitschleifkörper weisen üblicherweise eine größere Abmessung als die Gelenköffnungen auf, um ein Verkanten der Gleitschleifkörper in den Gelenköffnungen und nachfolgende Montageprobleme zu verhindern. Mit herkömmlichen Gleitschleifverfahren lassen sich daher zwar die Stanzgrate an allen gestanzten Schnittflächen entfernen, nicht jedoch der Glattschnittbereich und der Bruchbereich in den Gelenköffnungen der Kettenlaschen glätten. Bei feingestanzten Kettenlaschen kann ein stark ausgeprägter Stanzgrat durch die Gleitschleifkörper lediglich in die Gelenköffnung hineingebogen werden, ohne dass der Stanzgrat vollständig entfernt wird. Daher kann zumindest bei einzelnen feingestanzten Kettenlaschen trotz eines deutlich größeren Glattschnittbereichs ein stärkerer Pseudoanfangsverschleiß auftreten, mit entsprechend negativen Wirkungen auf die lokalen Spannungen in der Kettenlasche und die Bauteilfestigkeit. Im Bereich anderer verschleißbelasteter Außenkonturen der Kettenlasche führt der Gleitschleifvorgang zwar zu einem Glätten des Glattschnittbereichs und des Bruchbereichs der Schnittfläche, jedoch kann hierbei die Maßheitlichkeit und die Parallelität der Schnittflächen an der Außenkontur beeinträchtigt werden.

Bei einfachen Bauteilen aus Metall sind zum Entgraten neben mechanischen Verfahren wie beispielsweise dem Gleitschleifen der Gelenköffnungen von Kettenlaschen auch chemische und elektrochemische Tauchverfahren bekannt, mit denen Grate und scharfkantige Strukturen an den Oberflächen von Metallteilen materialabtragend entfernt werden. Dabei wird zusätzlich durch die abtragende Wirkung der eingesetzten chemischen Reagenzien mit oder ohne elektrolytischer Unterstützung die Oberfläche der behandelten Bauteile bei Beibehaltung ihrer eigentlichen Oberflächenstruktur poliert. Beim chemischen Entgraten wird die exponierte Lage der an Werkstücken durch eine mechanisch abrasive Bearbeitung entstandenen Grate genutzt, um über einen Abtrag von Material an der Gratoberfläche diese zu entfernen. Das Überstehen des Grats gegenüber der ausgehenden Fläche ermöglicht mindestens einen zweiseitigen Angriff der chemischen Reagenzien, insbesondere am Ansatz des Grats an der gewünschten Oberfläche. Bei einem hierzu inhärenten chemischen oder elektrochemischen Polieren werden die mikrogeometrischen Rauhigkeitsspitzen über der gesamten Oberflächentopologie abgetragen ohne jedoch die eigentliche mikrogeometrische Topologie der Oberfläche zu verändern, da im Gegensatz zu einem mechanisch abrasiven Schleifen die chemische Reagenz auf der gesamten Oberfläche wirkt und entsprechend überall Material abgetragen wird. Lediglich exponierte Spitzen und Kanten, die einen mehrseitigen Angriff der chemischen Reagenzien ermöglichen, können eine gewisse verstärkte Einebnung erfahren. Elektrochemische Verfahren zum Behandeln von Bauteilen nutzen neben der elektrokatalytischen Wirkung oftmals auch hohe Badtemperaturen aus, so dass hierbei meist nur geringe Behandlungszeiten erforderlich sind. Demgegenüber können rein chemische Verfahren zum Entgraten und Polieren von Bauteilen auch bei Umgebungstemperaturen mit schon geringem apparativen Aufbau eingesetzt werden.

Der vorliegenden Erfindung liegt daher die Aufgabe zugrunde, ein möglichst kostengünstiges Verfahren zum Herstellen von Kettenlaschen bereitzustellen, mit dem die nachteiligen Stanzwirkungen und Stanzrückstände im Bereich der Schnittfläche reduziert werden.

Erfindungsgemäß wird die vorstehende Aufgabe durch ein Herstellverfahren für Kettenlaschen nach Anspruch 1 gelöst. Das Glätten der mindestens einen Schnittfläche der gestanzten Kettenlasche einschließlich des Stanzgrats und der Rissflächenbereiche mittels des chemischen Agens führt überraschend zu einer überproportionalen Reduzierung des Verschleißes der Schnittflächen im Betrieb und zu einer Erhöhung der Dauerfestigkeit der Kettenlaschen bei einer gleichzeitig kostengünstigen Herstellung. Durch die exponierte Lage der Stanzgrate kann das chemische Agens auf mehrere Seiten der Grate einwirken und so den Grat in relativ kurzer Zeit abtragen, ohne dabei die angrenzenden Bereiche der Schnittfläche zu beeinträchtigen. Demgegenüber wird die Schnittfläche der gestanzten Kettenlasche nur einseitig dem chemischen Agens ausgesetzt, so dass über die gesamte Schnittfläche das chemische Agens in gleicher Weise wirkt. Überraschenderweise wird das Oberflächenprofil der Schnittfläche jedoch nicht nur poliert, sondern auch signifikant verrundet und geglättet. Dabei geht die Wirkung des chemischen Agens auf die makrogeometrische Struktur der Oberfläche weit über die zu erwartende Polierwirkung der mikrogeometrischen Strukturen hinaus und trägt auch bei vorstehenden und zurückversetzten flächigen Bereichen der Schnittfläche das Material an der Oberfläche einer Schnittfläche einer gestanzten Kettenlasche in einer unerwarteten Weise ab, so dass es zu einem Glätten der Schnittfläche kommt.

Zur Begrenzung des notwendigen Abtrags vom Material an der Oberfläche des mindestens einen Schnittfläche umfasst das Stanzen der Kettenlaschen das Vorstanzen und Nachschneiden verschleißbelasteter Konturen der Kettenlasche und das Ausstanzen bzw. Freistanzen der übrigen Konturen der Kettenlasche, wobei die mindestens eine Schnittfläche sich zumindest über einen Teil der verschleißbelasteten Konturen erstreckt. Da das Vorstanzen und Nachschneiden verschleißbelasteter Konturen bereits beim Stanzen der Kettenlaschen das Oberflächenprofil der Schnittfläche vergleichmäßigt, wird auch das Glätten mittels des chemischen Agens erleichtert. Zwar umfasst die mindestens eine Schnittfläche der verschleißbelasteten Konturen bei nachgeschnittenen Kettenlaschen einen Glattschnittbereich und einen Bruchbereich, jedoch lässt sich mittels des chemischen Agens bei Gelenköffnungen oder anderen verschleißbelasteten Konturen die Schnittfläche über die gesamte Höhe der Kettenlasche glätten. Bei einem Einsatz der Kettenlaschen in einer Kette können dadurch die Spannungen in der Gelenkfläche oder anderen belasteten Eingriffsflächen über einen möglichst großen Teil der Laschendicke verteilt werden.

In einer zweckmäßigen Form umfasst das Stanzen der Kettenlaschen das Feinstanzen verschleißbelasteter Konturen der Kettenlasche, wobei die mindestens eine Schnittfläche sich zumindest über einen Teil der verschleißbelasteten Konturen erstreckt. Beim Feinstanzen verschleißbelasteter Konturen wird ein möglichst großer Teil der Schnittfläche als Glattschnittbereich bereitgestellt. Demgegenüber entsteht beim langsamen Feinstanzen nur ein sehr kleiner bis gar kein Bruchbereich mit einem strukturell negativen Rissflächengewebe. Durch den hohen Glattschnittbereich werden beim Einsatz der Kettenlaschen in einer Kette die Tragflächen der als Gelenkfläche oder Angriffsfläche wirkenden Schnittfläche erhöht.

Bevorzugt umfassen die verschleißbelasteten Konturen der Kettenlasche die Gelenköffnungen und die mindestens eine Schnittfläche mindestens eine Gelenköffnung. Bei Zahnkettenlaschen können neben den Gelenköffnungen auch die Außen- und Innenflanken sowie der Zahngrund zwischen den einseitig vorstehenden Zähnen Teil der verschleißbelasteten Konturen sowie der behandelten Schnittfläche sein. In den Gelenköffnungen von Kettenlaschen vermeidet das Glätten der Schnittfläche der gestanzten Kettenlaschen eine punktuelle Belastung einzelner Bereiche der Schnittfläche bei einem Einsatz in einem Kettengelenk und vermeidet somit einen Pseudoanfangsverschleiß entsprechender Ketten.

Im Besonderen umfasst das Glätten der mindestens einen Schnittfläche der gestanzten Kettenlasche mittels des chemischen Agens das Glätten der Stanzriefen des Glattschnittbereichs. Beim Stanzen der Kettenlaschen entstehen sowohl beim einphasigen Feinstanzen als auch bei einem zweiphasigen Verfahren mit einem Vorstanzen und Nachschneiden verschleißbelasteter Konturen im Glattschnittbereich der Schnittfläche Stanzriefen, die in Richtung der Stanzbewegung des Stanzstempels verlaufen. Entsprechend verlaufen die Stanzriefen bei einem Einsatz dieser Schnittfläche in einem Kettengelenk, d.h. als Lagerfläche der Gelenköffnung, oder als Eingriffsfläche, d.h. als Zahnflanke, quer zur Gelenkbewegung bzw. zur Eingriffsbewegung. Durch die Stanzriefen wird das Öl, das zur Schmierung des Kettengelenks bzw. des Ketteneingriffs in ein Kettenrad zwischen den Gelenkflächen bzw. Eingriffsflächen notwendig ist, in verhältnismäßiger einfacher Weise schnell aus dem Gelenk bzw. dem Eingriff der Zahnflanken herausgefördert. Dadurch werden die Schmiereigenschaften des Ölfilms gemindert und folglich der Verschleiß der Gelenk- oder Eingriffsflächen erhöht. Durch das Glätten der Stanzrillen des Glattschnittbereichs kann das Öl besser im Gelenk bzw. zwischen zwei Eingriffsflächen gehalten werden, da die geglättete Oberfläche der Schnittfläche ohne ungünstig orientierte Stanzriefen ein beschleunigtes Abfließen des Öls verhindert, wodurch sich der Verschleiß verringert und entsprechend die Dauerfestigkeit der Kettenlaschen erhöht.

Besonders bei nachgeschnittenen Kettenlaschen aber gegebenenfalls auch bei feingestanzten Kettenlaschen kann das Glätten der mindestens einen Schnittfläche der gestanzten Kettenlasche mittels des chemischen Agens das Glätten der Abrissflächen des Bruchbereichs umfassen. Das Rissflächengewebe im Bruchbereich der Schnittfläche erhält durch das Abtragen von Material mittels des chemischen Agens geglättete und verrundete Oberflächenstrukturen, so dass flache Anrisse und scharfkantige Strukturen ganz beseitigt werden. Tiefere Mikrorisse lassen sich jedoch nur öffnen, was wiederum zu einer Verstärkung der Rauheit der Oberflächentopographie führt. Das Glätten des Bruchbereichs reduziert jedoch insgesamt die Kerbwirkung des Rissflächengewebes für potentielle Bruchausgänge und verbessert dadurch die Dauerfestigkeit der Kettenlasche.

Vorteilhafterweise umfasst das Glätten der mindestens einen Schnittfläche der gestanzten Kettenlasche mittels des chemischen Agens ein Vergleichmäßigen der Oberflächentopografie der mindestens einen Schnittfläche. Das Abtragen von Material an der Oberfläche der mindestens einen Schnittfläche verändert insgesamt die makrogeometrische Oberflächentopografie, indem alle Flächen im gesamten Wirkungsbereich des Prozesses entgratet, verrundet und abgetragen werden, so dass das Glätten der mindestens einen Schnittfläche das Grundgefüge des Materials der Kettenlaschen mit seinen materialinhärenten Eigenschaften an der neuen Oberfläche der mindestens einen Schnittfläche zur Geltung kommt. Durch eine derartige Reduzierung der stanzabhängigen Einflüsse im Bereich der Schnittfläche verbessert sich die Festigkeit des Bauteils und folglich auch die Dauerfestigkeit der Kettenlasche als Teil einer Kette. Entgegen der zu erwartenden relativ gleichmäßigen Wirkung des chemischen Agens auf der makrogeometrischen Oberfläche der mindestens einen Schnittfläche der gestanzten Kettenlasche wirkt das chemische Agens beim Abtragen des Materials an der Oberfläche in einer Abhängigkeit zur Oberflächentopografie. Das verstärkte Abtragen von Material an großflächigen exponierten Bereichen der unebenen Oberfläche führt zu einem unerwarteten und deutlichen Vergleichmäßigen der makrogeometrischen Oberflächentopografie.

Für eine gute Wirkung des chemischen Agens kann die Kettenlasche aus einem Stahl, insbesondere aus einem Kohlenstoff-Stahl hergestellt sein. Beim Glätten mittels eines chemischen Agens sind die Wirksubstanzen wie Mineralsäuren gut auf das zu bearbeitende Stahl-Material einstellbar. Bei Kettenlaschen aus einem Stahlwerkstoff ist das Glätten der mindestens einen Schnittfläche bereits bei Raumtemperaturen oder leicht darüber liegenden Temperaturen bis 50°C möglich. Um bei einer begrenzten Einwirkzeit eine ausreichende Wirkung zu erzielen, sollte der Kohlenstoffgehalt des Stahls 1,3 % nicht übersteigen.

Eine bevorzugte Ausführung des Herstellverfahrens sieht vor, dass das chemische Agens eine saure, oxidierende Lösung von Peroxyden, mit einer oder mehreren Mineralsäuren und Stabilisatoren ist. Derartige als chemisches Agens eingesetzte Peroxydhaltige Lösungen benötigen Stabilisatoren, da Peroxyde, wie beispielsweise Wasserstoffperoxyd, in Gegenwart von Metallen zu katalytischer Zersetzung neigen. Als Stabilisatoren dienen dabei insbesondere Harnstoff oder eine Mischung aus Harnstoff mit einer bzw. mehreren Alkandiphosphonsäuren oder Ammoniumionen. Die in solchen Lösungen eingesetzten Mineralsäuren, beispielsweise Ammoniumhydrogendiflurid, Flusssäure (Fluorwasserstoffsäure), Phosphorsäure oder Schwefelsäure führen, trotz ihres meist geringen Anteils an dem Agens von unter 1 % zu einem geringen ph-Wert zwischen 0 und 3 und einer entsprechenden guten oxidierenden Wirkung des chemischen Agens zum Abtragen von Material an der Oberfläche der mindestens einen Schnittfläche.

Für eine gute Benetzung der Oberfläche der mindestens einen Schnittfläche kann das Behandeln der mindestens einen Schnittfläche der gestanzten Kettenlasche mittels eines Eintauchens der Kettenlasche in einem Bad mit dem chemischen Agens erfolgen. Zwar wird durch das Eintauchen in einem Bad eine gute Benetzung sichergestellt, jedoch wird hierzu ein relatives großes Volumen des chemischen Agens benötigt. Demgegenüber ist eine deutlich geringere Menge des chemischen Agens notwendig, falls das Behandeln der mindestens einen Schnittfläche der gestanzten Kettenlasche mittels eines Aufsprühens des chemischen Agens auf die Kettenlasche erfolgt, wobei das Aufsprühen jedoch die Gefahr einer schlechteren Benetzung der Schnittfläche und eines ungleichmäßigen Abtrags von Material beinhaltet.

Um ein ausreichenden Materialabtrag an der Oberfläche der mindestens einen Schnittfläche zu erreichen kann die begrenzte Zeitdauer des Aussetzens der mindestens einen Schnittfläche der gestanzten Kettenlasche dem chemischen Agens zwischen 1 und 12 Minuten, bevorzugt zwischen 2 und 6 Minuten, insbesondere zwischen 3 und 4 Minuten, betragen. Da die optimale Einwirkzeit des chemischen Agens neben Verfahrensparametern wie der Temperatur, der Zusammensetzung der Lösung und den bereits im Agens gelösten Metallionen auch von dem Material des Werkstücks, d.h. der Kettenlasche, und der anfänglichen Oberflächenbeschaffenheit der zu glättenden Schnittflächen abhängt, ist die Einschränkung der begrenzten Zeitdauer des Aussetzens nur in verhältnismäßig großen Zeitabschnitten möglich. Je nach Verfahrensparametern und Materialeigenschaften kann mittels des chemischen Agens ein Abtrag zwischen 0,5 bis 7,5 µm/Minute erreicht werden. Bei nachgeschnittenen oder feingestanzten Kettenlaschen aus einem herkömmlichen Laschenmaterial mit einem großen Glattschnittanteil beträgt der Abtrag zwischen 4,0 und 6,0 µm/Minute.

Bevorzugt kann das Abtragen von Material an der Oberfläche der mindestens einen Schnittfläche mindestens 10 µm, bevorzugt mindestens 15 µm, erreichen. Ein derart relativ großer Materialabtrag an der mindestens einen Schnittfläche der gestanzten Kettenlasche ermöglicht ein sicheres Glätten der Schnittfläche auch bei markanten Stanzriefen im Glattschnittbereich sowie einen sicheren Abtrag ausgeprägter Stanzgrate beim Feinstanzen von Kettenlaschen. Da ein solch hoher Abtrag von Material an der Oberfläche der mindestens einen Schnittfläche deutliche Auswirkungen auf die Länge einer Gelenk-oder Zahnlaschenkette aus derart hergestellten Kettenlaschen hat, ist diese Höhe des Abtrags beim Stanzen der Kettenlaschen zu berücksichtigen und die Kettenlaschenkontur entsprechend größer bzw. die Gelenköffnungen entsprechend kleiner auszulegen.

In einer weiteren Ausgestaltung des Herstellverfahrens für Kettenlaschen kann für eine möglichst optimale Wirkung des chemischen Agens auf die mindestens eine Schnittfläche der Kettenlasche sowie zur Verhinderung einer ungleichmäßigen Wirkung des chemischen Agens ein Reinigen der Kettenlasche mit einem Reinigungsmittel vor dem Behandeln der mindestens einen Schnittfläche mit dem chemischen Agens ausgeführt werden. Für eine sichere Passivierung möglicher Reste des chemischen Agens nach dem Entfernen des chemischen Agens kann ein Säubern der Kettenlasche mit einem Wasserverdrängungsmittel vorgesehen sein, bevor mit dem Beenden des Herstellverfahrens die Verfahrensschritte abgeschlossen werden.

Die vorliegende Erfindung bezieht sich weiter auf Kettenlaschen mit zwei an gegenüberliegenden Enden der Kettenlasche angeordneten, gestanzten Gelenköffnungen, wobei die Schnittfläche der gestanzten Bolzenlöcher mit einem der oben erläuterten Herstellverfahren mittels eines chemischen Agens geglättet ist. Das Abtragen von Material an der Oberfläche der ausgestanzten Gelenköffnung mit einem chemischen Wirkungsmittel führt zu einem überraschend stark verrundeten und geglätteten makrogeometrischen Oberflächenprofil und dadurch zu sehr guten Gleiteigenschaften gegenüber dem Gelenkpartner. Da dabei gleichzeitig auch Stanzgrate an der Stanzgratseite der Gelenköffnungen entfernt werden, verbessert sich gleichzeitig auch die Dauerbelastbarkeit ohne eine zusätzliche Bearbeitung der Kettenlasche.

Eine weitere Ausführungsform sieht vor, dass die Kettenlasche als Zahnlasche mit zwei an einer Seite der Zahnlasche überstehenden Zähnen ausgebildet ist, wobei optional zu den Gelenköffnungen auch die Schnittfläche mindestens einer der verschleißbelasteten Zahnaußenflanken, Zahninnenflanken und Zahngrundflächen der Zähne mittels des chemischen Agens geglättet ist. Neben der oftmals hohen Belastung von Zahnlaschenketten beim Einsatz in Verbrennungsmotoren im Verhältnis zu ihrer Dimensionierung weisen Zahnlaschen zusätzliche verschleißbelastete Konturen auf, so dass bei einem Glätten der Gelenköffnungen und optional der weiteren verschleißbelasteten Konturen der gestanzten Kettenlasche die verbesserten Gleiteigenschaften dieser Flächen die Standzeit entsprechender Ketten signifikant erhöhen kann.

Nachfolgend wird ein Ausführungsbeispiel der vorliegenden Erfindung anhand einer Zeichnung näher erläutert. Es zeigen:

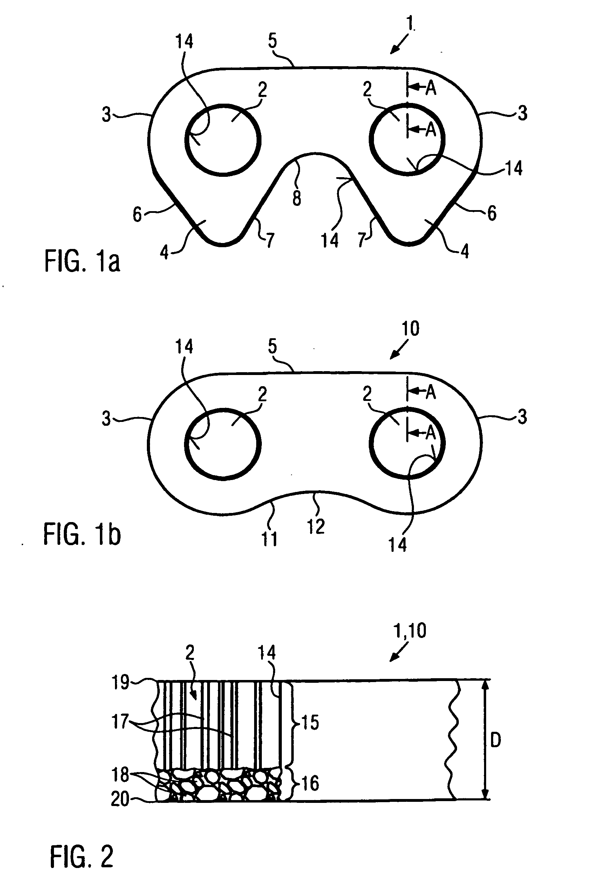

- Fig. 1 a: eine Seitenansicht einer mit einem erfindungsgemäßen Verfahren hergestellten Zahnlasche,
- Fig. 1 b: eine Seitenansicht einer mit einem erfindungsgemäßen Verfahren hergestellten Kettenlasche, und
- Fig. 2: eine teilweise Schnittansicht einer Schnittfläche der gestanzten Kettenlaschenkontur der Zahnlasche aus Fig. 1a entlang der Linie A-A.

Fig. 1 zeigt eine Zahnlasche 1 für geräuscharme Zahnlaschenketten, die mit einem Herstellverfahren entsprechend der vorliegenden Erfindung gefertigt wurde. Die Zahnlasche 1 weist zwei Gelenköffnungen 2 auf, die jeweils den zwei in Längsrichtung der Zahnlasche 1 vorhandenen gebogenen Stirnseitenbereichen 3 der äußeren Kettenlaschenkontur der Zahnlasche 1 zugeordnet sind. Die Kettenlaschenkontur weist weiter zwei ineinander übergehende Zähne 4 und einen Rückenteil 5 auf, die auf jeweils einer Längsseite der Kettenlaschenkontur die zwei gebogenen Stirnseitenbereiche 3 miteinander verbinden. Die beiden auf einer Längsseite der Zahnlasche 1 nebeneinander angeordneten Zähne 4 weisen an den einander abgewandten Seiten zwei Außenflanken 6 und auf den einander zugewandten Seiten zwei Innenflanken 7 auf, wobei die Innenflanken 7 in ihrem Gablungsbereich durch einen Zahngrund 8 miteinander verbunden sind. Außerdem gehen die Außenflanken 6 und Innenflanken 7 der Zähne 4 in den Zahnspitzen ineinander über. Die Außenflanken 6 der Zähne 4 grenzen an die gebogenen Stirnseitenbereiche 3 der Zahnlasche 1 an, die in einem Abstand zu den Gelenköffnungen 2 diese umgeben. Auf der gegenüberliegenden Längsseite der Zahnlasche 1 grenzen die Stirnseitenbereiche 3 an das Rückenteil 5.

Eine zweite Ausführungsform einer mit einem erfindungsgemäßen Verfahren hergestellten Kettenlasche 10 mit einer gegenüber der Zahnlasche 1 unterschiedlichen äußeren Kettenlaschenkontur zeigt Fig. 1 b. Diese einfache Kettenlasche 10 weist ebenfalls zwei den gebogenen Stirnseitenbereichen 3 in Längsrichtung der Kettenlaschen 10 zugeordnete Gelenköffnungen 2 auf. Des Weiteren sind die zwei gebogenen Stirnseitenbereiche 3 wiederum mit einem Rückenteil 5 verbunden. Anstelle von zwei Zähnen 4 zum Eingriff in ein zugeordnetes Kettenrad (nicht gezeigt) sind die gebogenen Stirnseitenbereiche 3 auf der dem Rückenteil 5 gegenüberliegenden Längsseite mit einem einfachen Vorderteil 11 verbunden. Dabei können sowohl das Rückenteil 5 als auch das Vorderteil 11 gerade oder mit einer konkaven Vertiefung 12 versehen sein, die zwischen den Gelenköffnungen 2 zu einer Einschnürung der Kettenlaschenkontur in Längsrichtung der Kettenlasche 10 führt.

Die Gelenköffnungen 2 der Kettenlasche 10 bzw. der Zahnlasche 1 dienen dazu Gelenkbolzen (nicht gezeigt) drehbar in der Gelenköffnung 2 aufzunehmen und dadurch ein oder mehrere parallel angeordnete Kettenlaschen 10 bzw. Zahnlaschen 1 eines Kettenglieds untereinander zu verbinden sowie diese Kettenlaschen 10 bzw. Zahnlaschen 1 eines Kettenglieds mit den Kettenlaschen 10 bzw. Zahnlaschen 1 eines angrenzenden zweiten Kettenglieds zu verbinden. Dabei verlaufen die Achsen der Gelenköffnungen 2 sowie der darin anzuordnenden Gelenkbolzen parallel zueinander sowie senkrecht zur Seitenfläche der Kettenlasche 10 bzw. Zahnlasche 1. Alternativ zu den in den Figuren 1 a und 1 b dargestellten runden Gelenköffnung 2 zur Aufnahme runder Gelenkbolzen können die Zahnlaschen 1 bzw. Kettenlaschen 10 auch mit unrunden Gelenköffnungen zur Aufnahme von beispielsweise Wiegegelenkbolzen ausgebildet sein. Die Form der Gelenköffnungen 2 ist dann nicht mehr kreisförmig sondern an die Form der Gelenkbolzen, beispielsweise einer abgerundeten dreieckigen Gestalt der paarweise in einer Gelenköffnung aufgenommenen Wiegegelenkbolzen angepasst.

Fig. 2 ist eine vergrößerte Schnittdarstellung durch einen Teil einer Gelenköffnung 2 der Zahnlasche 1 aus Fig. 1a, bzw. der Kettenlasche 10 aus Fig. 1 b. Die durch das Stanzen der Gelenköffnungen 2 entstehende Schnittfläche 14 zwischen den beiden Seitenflächen der Kettenlasche 10 bzw. entsprechend der Gelenköffnungen 2 der Zahnlasche 1. Die Schnittfläche 14 weist zum Einen einen Glattschnittbereich 15, der sich ausgehend von der Stanzeinzugsseite über ca. 70 % der Höhe der Schnittfläche 14, entsprechend der Dicke der Kettenlasche 10 bzw. Zahnlasche 1, erstreckt und ein sich daran anschließenden Bruchbereich 16. Im Glattschnittbereich 15 der Schnittfläche 14 erstrecken sich in Stanzrichtung mehrere Stanzriefen 17, die sich entsprechend der Stanzrichtung in der Gelenköffnung parallel zu den Achsen dort hindurch gehender Gelenkbolzen verlaufen. Der Bruchbereich 16 ist im Wesentlichen als Rissflächengewebe 18 ausgebildet, das gegenüber dem Glattschnittbereich 15 etwas zurückversetzt ist, d.h. die Spitzen des Rissflächengewebes 18 erreichen nicht die Ebene des Glattschnittbereichs 15.

Insbesondere Kettenlaschen 10 bzw. Zahnlaschen 1 mit einer relativ großen Laschendicke D werden bei einem erfindungsgemäßen Herstellverfahren aus einem entsprechend dicken Stahlblech feingestanzt, wobei die Feinstanzgeschwindigkeit nur zwischen 10 und 20 % einfacher Stanzverfahren beträgt. Beim Feinstanzen wird durch die geringe Geschwindigkeit des Stanzverfahrens ein Bruch der Schnittfläche erst sehr kurz vor der Stanzgratseite verursacht, weshalb der im Wesentlichen ein- und abrissfreie Glattschnittanteil sich über 90 % und mehr der Schnittfläche 14 bzw. der Laschendicke D erstreckt. Demgegenüber beträgt der entsprechende Bruchbereich 16 mit einem Rissflächengewebe 18 nur 0 bis 10 %. Bei entsprechenden Eigenschaften des Materials der Kettenlaschen 10 bzw. Zahnlaschen 1 und einem guten Zustand der Stanzvorrichtung können beim Feinstanzen auch Glattschnittanteile von 100 % erreicht werden, zumindest über einen Teil der Kettenlaschenkontur der Kettenlaschen 10 bzw. Zahnlaschen 1. Aus Gründen der Darstellbarkeit sind die Anteile des Glattschnittbereichs 15 und des Bruchbereichs 16 der in Fig. 2 dargestellten Schnittansicht einer gestanzten Kettenlaschenkontur nicht proportional zu den mit dem Feinstanzen von Kettenlaschen 10 bzw. Zahnlaschen 1 erreichbaren Verhältnissen dargestellt, ohne jedoch eine einschränkende Wirkung auf die Anteile des Glattschnittbereichs 15 und des Bruchbereichs 16 zu haben.

Bei einem weiteren erfindungsgemäßen Herstellverfahren für Kettenlaschen 10 bzw. Zahnlaschen 1 werden zunächst die Gelenköffnungen 2 sowie weitere verschleißbelastete Konturen, beispielsweise die die Außenflanken 6, Innenflanken 7 und der Zahngrund 8 von Zahnlaschen 1 sowie gegebenenfalls die Rückenteile 5 mit einem geringen Aufmaß aus einem Stahlblech oder einem Bandstahlmaterial grob vorgestanzt und anschließend in einem Nachschneideschnitt auf ihr Endmaß feingestanzt. Beim Nachschneiden wird die mit einem Aufmaß grob vorgestanzte Kontur der Kettenlasche 10 auf ihr Endmaß feingestanzt, wobei durch die geringe Spanbreite des Nachschneideschnittes die Schnittfläche 14 einen hohen im wesentlichen ein- und abrissfreien Glattschnittanteil von ca. 70 % erreicht, während der entsprechende Bruchbereich 16 mit einem Rissflächengewebe 18 nur ca. 30 % beträgt. Während des zweiteiligen Nachschneidevorgangs bleiben zur besseren Positionierung der Kettenlasche 10 bzw. der Zahnlasche 1 alle verschleißfreien Bereiche der Kettenlaschenkontur mit dem Stahlblech verbunden.

Beim Nachschneiden beträgt der Schneidspalt zwischen Stanzstempel und Matrize nur ca. 3 % der Materialdicke, wobei das Nachschneiden zur Verbesserung der Maßheitlichkeit auch in einer dem Grobstanzen entgegengesetzten Stanzrichtung erfolgen kann. Nachdem die Gelenköffnung 2 und alle verschleißbelasteten Bereiche der Kettenlaschenkontur nachgeschnitten wurden, wird die restliche zunächst weiterhin mit dem Stahlblech verbundene Kettenlaschenkontur freigestanzt.

Trotz des Nachschneidens oder Feinstanzens der verschleißbelasteten Konturen und der Gelenköffnungen 2 entsteht gegenüber der Stanzeinzugsseite 19 auf der Stanzgratseite 20 im Bereich des Übergangs der Seitenfläche der Kettenlasche 10 bzw. der Zahnlasche 1 zur gestanzten Schnittfläche 14 eine gratige Kante mit vorstehenden Ecken und Stanzgraten. Der sich an die Stanzeinzugsseite 19 anschließende Glattschnittbereich 15 weist eine im Wesentlichen glatte Oberfläche ohne signifikante Risse und Rissflächenbereiche auf. Jedoch weist der Glattschnittbereich 15 Stanzriefen 17 auf, die senkrecht zur Seitenfläche der Kettenlasche 10 bzw. Zahnlasche 1 sich in Stanzrichtung über den Glattschnittbereich 15 erstrecken. Die Stanzriefen 17 entstehen beim Stanzprozess und können sowohl durch kleinste Stanzreste oder Beschädigungen am Feinstanz- oder Nachschneidestempel, aber auch durch das Korngefüge und Verunreinigungen des Materials der Kettenlasche 10 hervorgerufen werden. Demgegenüber entsteht das Rissflächengewebe 18 des sich an den Glattschnittbereich 15 angrenzenden Bruchbereichs 16 durch den Abriss des Materials beim Nachschneiden oder Feinstanzen. Der Bruchbereich 16 ist gegenüber der Oberfläche des Glattschnittbereichs 15 zurückversetzt, wobei das raue Rissflächengewebe 18 zu lokalen Konzentrationen von Zugspannungen führt und so das Entstehen von Anrissen fördert.

Bei den dem Stanzen der Kettenlaschen 10 bzw. Zahnlaschen 1 nachfolgenden Arbeitsschritten des erfindungsgemäßen Herstellverfahrens wird die Schnittfläche 14 der Gelenköffnungen 2 bzw. anderer verschleißbelasteter Bereiche der Kettenlaschenkontur der Kettenlasche 10 bzw. der Zahnlasche 1 mit einem chemischen Agens behandelt, das auf die Schnittfläche 14 abtragend wirkt. Auch wenn bereits ein Aufsprühen des chemischen Agens zum Behandeln einer Schnittfläche 14 im Prinzip ausreichend ist und in Sonderfällen sinnvoll sein kann, werden die Kettenlaschen 10 bzw. Zahnlaschen 1 bevorzugt in ein Bad mit dem chemischen Agens getaucht, so dass die Schnittflächen 14 möglichst gleichmäßig dem chemischen Agens ausgesetzt sind. In einem solchen Bad werden die Schnittflächen 14 der gestanzten Kettenlasche 10 bzw. Zahnlasche 1 dem chemischen Agens für eine ausreichende Zeitdauer ausgesetzt, um über das Abtragen von Material an der Oberfläche der Schnittfläche 14 ein Glätten der Schnittfläche 14 zu bewirken. Je nach Zusammensetzung des chemischen Agens, üblicherweise eine sauere, oxidierende Lösung von Peroxyden (5 - 8 %) mit Mineralsäuren (bis 1 %) und Stabilisatoren sowie dem Material der Kettenlasche 10 bzw. Zahnlasche 1 und insbesondere der Tiefe der Stanzriefen 17 im Glattschnittbereich 15 muss die Behandlungszeit so gewählt werden, dass ein ausreichender Materialabtrag von etwa 15 µm an der Oberfläche der Schnittfläche 14 erreicht wird. Für ein sicheres Glätten der Schnittfläche 14 beträgt der durchschnittliche Abtrag über der Schnittfläche 14 das Doppelte der Tiefe der Stanzriefen 17, mindestens die einfache Tiefe der Stanzriefen 17. Im Gegensatz zu elektrochemischen Verfahren reicht bei einem derartigen Tauchverfahren eine Badtemperatur im Bereich der Umgebungstemperatur aus, z.B. zwischen 20° und 50°C, um eine signifikante Abtragung von Material zu bewirken.

Das Abtragen von Material an der Oberfläche der Schnittfläche 14 bewirkt zum Einen ein Abtrag von Stanzgraten und scharfen Kanten an der Stanzeinzugsseite und zum Anderen zu einem Glätten der gesamten Schnittfläche. Dabei wird nicht nur das Rissflächengewebe 18 im Bruchbereich geglättet, sondern auch die Stanzriefen 17 im Glattschnittbereich 15 entfernt. Hier ist bereits der Umfang des Glättens des Rissflächengewebes 18 des Bruchbereichs 16 überraschend, auch wenn er sich zum Teil durch die größeren Oberflächen der Spitzen und Kanten des Rissflächengewebes 18 und die abtragende Wirkung des chemischen Agens auf diese Flächen zumindest zum Teil erklären lässt. Demgegenüber ist das Glätten der Stanzriefen 17 im Glattschnittbereich 15 durch das Abtragen von Material an der gesamten benetzten Oberfläche der Schnittfläche für den Fachmann völlig unerwartet und überraschend, da das chemische Agens in gleicher Weise auf die Stanzriefen 17 wie auf den restlichen Oberflächenbereich des Glattschnittbereichs 15 wirkt. Das Entfernen der Stanzriefen 17 beim Glätten des Glattschnittbereichs 15 mittels des chemischen Agens bewirkt eine im Wesentlichen glatte Oberfläche des Glattschnittbereichs 15 ohne Stanzriefen 17 und damit auch eine verbesserte Gleitwirkung und Schmiereigenschaften beim Einsatz der Schnittfläche 14 als Gelenkfläche oder Eingriffsfläche. Ergänzend werden die Verschleißeigenschaften und die Dauerbelastbarkeit durch die abgerundete Stanzeinzugsseite und die Glättung des Rissflächengewebes 18 optimiert. Beim Glätten des Rissflächengewebes 18 wird das Oberflächenprofil bis in den Mikrobereich hinein geglättet und verrundet, wobei Anrisse und scharfkantige Strukturen entweder beseitigt oder verrundet und Haarrisse geöffnet werden, so dass keine Kerbwirkung von dem Rissflächengewebe 18 mehr ausgeht.

Mit dem erfindungsgemäßen Herstellverfahren für Kettenlaschen 10 bzw. Zahnlaschen 1 wird die gesamte Oberflächentopografie der Schnittfläche 14 verändert. Über das Abtragen von Material wird an der Oberfläche der Schnittfläche 14 das ungestörte Grundgefüge des Materials der Kettenlaschen 10 zur Geltung und Wirkung gebracht mit optimalen Eigenschaften im Hinblick auf die Belastbarkeit, die Dauerfestigkeit und das Gleitverhalten. Das überraschend intensive Glätten der Schnittfläche 14 durch das Abtragen von Material an der Oberfläche mittels des chemischen Agens wirkt somit überraschend selektiv nicht nur auf vorstehende Grate und Kanten sowie raue, mikrogeometrische Oberflächenprofile, sondern auch auf makrogeometrische Strukturen mit relativ großen ebenen Flächen unterschiedlicher Höhen und stellt im Bereich der Schnittfläche 14 gestanzter Kettenlaschen 10 bzw. Zahnlaschen 1 eine glatte Oberfläche mit einem im Wesentlichen ungestörten Materialgefüge bereit. Alle oberflächennahen geschädigten Werkstoffschichten werden beim Abtragen von Material an der Oberfläche der Schnittfläche 14 entfernt.

## Patentansprüche

1. Herstellverfahren für Kettenlaschen (1, 10) mit dem Schritt:
- Stanzen der Kettenlaschen (1, 10), wobei das Stanzen der Kettenlaschen (1, 10) das Vorstanzen und Nachschneiden verschleißbelasteter Konturen der Kettenlasche (1, 10) oder das Feinstanzen verschleißbelasteter Konturen der Kettenlasche (1, 10) und jeweils das Ausstanzen der übrigen Konturen der Kettenlasche (1, 10) umfasst,
**dadurch gekennzeichnet, dass** danach folgende Schritte durchgeführt werden:
- Behandeln mindestens einer Schnittfläche (14) der gestanzten Kettenlasche (1, 10) mit einem chemischen Agens, das auf die Schnittfläche (14) abtragend wirkt, wobei die mindestens eine Schnittfläche (14) sich zumindest über einen Teil der verschleißbelasteten Konturen erstreckt,
- Aussetzen der mindestens einen Schnittfläche (14) der gestanzten Kettenlasche (1, 10) dem chemischen Agens für eine begrenzte Zeitdauer,
- Abtragen von Material an der Oberfläche der mindestens einen Schnittfläche (14) der gestanzten Kettenlasche (1, 10) mittels des chemischen Agens,
- Glätten der mindestens einen Schnittfläche (14) der gestanzten Kettenlasche (1, 10) mittels des chemischen Agens,
- Entfernen des chemischen Agens.

2. Herstellverfahren für Kettenlaschen (1, 10) nach Anspruch 1,
**dadurch gekennzeichnet, dass** die verschleißbelasteten Konturen der Kettenlasche die Gelenköffnungen (2) umfassen und die mindestens eine Schnittfläche (14) mindestens eine Gelenköffnung (2) umfasst.

3. Herstellverfahren für Kettenlaschen (1, 10) nach Anspruch 1 oder 2,
**dadurch gekennzeichnet, dass** das Glätten der mindestens einen Schnittfläche (14) der gestanzten Kettenlasche (1, 10) mittels des chemischen Agens das Glätten der Stanzriefen (17) eines Glattschnittbereichs (15) der Schnittfläche (14) umfasst.

4. Herstellverfahren für Kettenlaschen (1, 10) nach einem der Ansprüche 1 bis 3,
**dadurch gekennzeichnet, dass** das Glätten der mindestens einen Schnittfläche (14) der gestanzten Kettenlasche (1, 10) mittels des chemischen Agens das Glätten der Abrissflächen (18) eines Bruchbereichs (16) der Schnittfläche (14) umfasst.

5. Herstellverfahren für Kettenlaschen (1, 10) nach einem der Ansprüche 1 bis 4,
**dadurch gekennzeichnet, dass** das Glätten der mindestens einen Schnittfläche (14) der gestanzten Kettenlasche (1, 10) mittels des chemischen Agens ein Vergleichmäßigen der Oberflächentopographie der mindestens einen Schnittfläche (14) umfasst.

6. Herstellverfahren für Kettenlaschen (1, 10) nach einem der Ansprüche 1 bis 5,
**dadurch gekennzeichnet, dass** die Kettenlasche (1, 10) aus einem Stahl, insbesondere aus einem Kohlenstoff-Stahl hergestellt ist.

7. Herstellverfahren für Kettenlaschen (1, 10) nach einem der Ansprüche 1 bis 6,
**dadurch gekennzeichnet, dass** das chemische Agens eine saure, oxidierende Lösung von Peroxiden, insbesondere Wasserstoffperoxid, mit Mineralsäuren, insbesondere Ammoniumhydrogendifluorid, Flusssäure, Phosphorsäure oder Schwefelsäure, und Stabilisatoren, insbesondere Harnstoff oder eine Mischung aus Harnstoff und einer oder mehrere Alkandiphosphonsäuren, ist.

8. Herstellverfahren für Kettenlaschen (1, 10) nach einem der Ansprüche 1 bis 7,
**dadurch gekennzeichnet, dass** das Behandeln der mindestens einen Schnittfläche (14) der gestanzten Kettenlasche (1, 10) mittels eines Eintauchens der Kettenlasche (1, 10) in einem Bad mit dem chemischen Agens erfolgt.

9. Herstellverfahren für Kettenlaschen (1, 10) nach einem der Ansprüche 1 bis 8,
**dadurch gekennzeichnet, dass** die begrenzte Zeitdauer des Aussetzens der mindestens einen Schnittfläche (14) der gestanzten Kettenlasche (1, 10) dem chemischen Agens zwischen 1 und 12 Minuten, bevorzugt zwischen 2 und 6 Minuten beträgt.

10. Herstellverfahren für Kettenlaschen (1, 10) nach einem der Ansprüche 1 bis 9,
**dadurch gekennzeichnet, dass** das Abtragen von Material an der Oberfläche der mindestens einen Schnittfläche (14) mindestens 10 µm, bevorzugt mindestens 15 µm erreicht.

11. Herstellverfahren für Kettenlaschen (1, 10) nach einem der Ansprüche 1 bis 9 mit den weiteren Schritten:
- Reinigen der Kettenlasche (1, 10) mit einem Reinigungsmittel vor dem Behandeln der mindestens einen Schnittfläche (14) mit einem chemischen Agens,
- Säubern der Kettenlasche (1, 10) mit einem Wasserverdrängungsmittel nach dem Entfernen des chemischen Agens, und
- Beenden des Herstellverfahrens.

12. Kettenlaschen (1, 10) mit zwei an gegenüberliegenden Enden der Kettenlasche (1, 10) angeordneten, gestanzten Gelenköffnungen (2), wobei die Schnittfläche (14) der gestanzten Gelenköffnungen (2) mit einem Herstellverfahren nach einem der Ansprüche 1 bis 11 mittels des chemischen Agens geglättet ist.

13. Kettenlasche (1, 10) nach Anspruch 12,
**dadurch gekennzeichnet, dass** die Kettenlasche (1, 10) als Zahnlasche (1) mit zwei an einer Seite der Zahnlasche (1) überstehenden Zähnen ausgebildet ist, wobei optional auch die Schnittfläche (14) mindestens einer der verschleißbelasteten Zahnaußenflanken (6), Zahninnenflanken (8) und Zahngrundfläche (4) der Zähne mittels des chemischen Agens geglättet ist.

14. Gelenkkette, Hülsenkette oder Zahnkette, die insbesondere als Antriebskette in Verbrennungsmotoren eingesetzt ist, mit Kettenlaschen (1, 10) nach Anspruch 12 oder 13.

## Claims

1. A production process for chain links (1, 10) with the step
- stamping the chain links (1, 10), wherein the stamping of the chain links (1, 10) comprises the pre-stamping and re-cutting of contours of the chain link (1, 10) stressed by wear or the fine stamping of contours of the chain link (1, 10) stressed by wear and in each case the stamping out of the remaining contours of the chain link (1, 10),
**characterized in that** the following steps are subsequently carried out:
- treating at least one cut face (14) of the stamped chain link (1, 10) with a chemical agent which acts upon the cut face (14) in an abrasive manner, wherein the at least one cut face (14) extends at least over part of the contours stressed by wear,
- exposing the at least one cut face (14) of the stamped chain link (1, 10) to the chemical agent for a limited duration,
- removing material on the surface of the at least one cut face (14) of the stamped chain link (1, 10) by means of the chemical agent,
- smoothing the at least one cut face (14) of the stamped chain link (1, 10) by means of the chemical agent,
- removing the chemical agent.

2. A production process for chain links (1, 10) according to Claim 1, **characterized in that** the contours of the chain link stressed by wear comprise the link openings (2) and the at least one cut face (14) comprises at least one link opening (2).

3. A production process for chain links (1, 10) according to Claim 1 or 2, **characterized in that** the smoothing of the at least one cut face (14) of the stamped chain link (1, 10) by means of the chemical agent comprises the smoothing of the stamped grooves (17) of a straight cut area (15) of the cut face (14).

4. A production process for chain links (1, 10) according to any one of Claims 1 to 3, **characterized in that** the smoothing of the at least one cut face (14) of the stamped chain link (1, 10) by means of the chemical agent comprises the smoothing of the tear faces (18) of a fracture area (16) of the cut face (14).

5. A production process for chain links (1, 10) according to any one of Claims 1 to 4, **characterized in that** the smoothing of the at least one cut face (14) of the stamped chain link (1, 10) by means of the chemical agent comprises an homogenization of the surface topography of the at least one cut face (14).

6. A production process for chain links (1, 10) according to any one of Claims 1 to 5, **characterized in that** the chain link (1, 10) is produced from a steel, in particular from a carbon steel.

7. A production process for chain links (1, 10) according to any one of Claims 1 to 6, **characterized in that** the chemical agent is an acidic oxidizing solution of peroxides, in particular hydrogen peroxide, with mineral acids, in particular ammonium hydrogen difluoride, hydrofluoric acid, phosphoric acid or sulphuric acid, and stabilizers, in particular urea or a mixture of urea and one or more alkan diphosphonic acids.

8. A production process for chain links (1, 10) according to any one of Claims 1 to 7, **characterized in that** the treatment of the at least one cut face (14) of the stamped chain link (1, 10) is carried out by means of immersion of the chain link (1, 10) in a bath with the chemical agent.

9. A production process for chain links (1, 10) according to any one of Claims 1 to 8, **characterized in that** the limited duration of the exposure of the at least one cut face (14) of the stamped chain link (1, 10) to the chemical agent amounts to between 1 and 12 minutes, preferably between 2 and 6 minutes.

10. A production process for chain links (1, 10) according to any one of Claims 1 to 9, **characterized in that** the removal of material on the surface of the at least one cut face (14) reaches at least 10 µm, preferably at least 15 µm.

11. A production process for chain links (1, 10) according to any one of Claims 1 to 9 with the further steps:
- cleaning the chain link (1, 10) with a cleaning agent before the treatment of the at least one cut face (14) with a chemical agent,
- cleaning off the chain link (1, 10) with a water-displacing agent after the removal of the chemical agent, and
- terminating the production process.

12. Chain links (1, 10) with two stamped link openings (2) arranged at opposite ends of the chain link (1, 10), wherein the cut face (14) of the stamped link openings (2) is smoothed by a production process according to any one of Claims 1 to 11 by means of the chemical agent.

13. A chain link (1, 10) according to Claim 12, **characterized in that** the chain link (1, 10) is designed in the form of a tooth link (1) with two teeth projecting on one side of the tooth link (1), wherein the cut face (14) of at least one of the tooth external flanks (6), tooth internal flanks (8) and tooth base area (4) - stressed by wear - of the teeth is optionally also smoothed by means of the chemical agent.

14. A link-type chain, a sleeve-type chain or a tooth-type chain, which in particular is used as a driving chain in internal-combustion engines, with chain links (1, 10) according to Claim 12 or 13.

## Revendications

1. Procédé de fabrication pour des plaques de chaîne (1, 10), avec les étapes suivantes :
- découpage à la presse des plaques de chaîne (1, 10), étant précisé que le découpage à la presse des plaques de chaîne (1, 10) comprend le prédécoupage et le recoupage de contours de la plaque de chaîne (1, 10) soumis à l'usure, ou le découpage de précision de contours de la plaque de chaîne (1, 10) soumis à l'usure et le découpage des autres contours de la plaque de chaîne (1, 10),
**caractérisé en ce que** les étapes suivantes sont ensuite exécutées :
- traitement d'au moins une surface de coupe (14) de la plaque de chaîne (1, 10) découpée, avec un agent chimique qui exerce une action de corrosion sur ladite surface de coupe (14), étant précisé que la ou les surfaces de coupe (14) s'étendent sur une partie au moins des contours soumis à l'usure,
- exposition de la ou des surfaces de coupe (14) de la plaque de chaîne (1, 10) découpée à l'agent chimique pour une durée limitée,
- corrosion de la matière sur la surface de la ou des surfaces de coupe (14) de la plaque de chaîne (1, 10) découpée, à l'aide de l'agent chimique,
- lissage de la ou des surfaces de coupe (14) de la plaque de chaîne (1, 10) découpée, à l'aide de l'agent chimique,
- élimination de l'agent chimique.

2. Procédé de fabrication pour des plaques de chaîne (1, 10) selon la revendication 1, **caractérisé en ce que** les contours de la plaque de chaîne soumis à l'usure comprennent les ouvertures d'articulation (2), et la ou les surfaces de coupe (14) comprennent au moins une ouverture d'articulation (2).

3. Procédé de fabrication pour des plaques de chaîne (1, 10) selon la revendication 1 ou 2, **caractérisé en ce que** le lissage, à l'aide de l'agent chimique, de la ou des surfaces de coupe (14) de la plaque de chaîne (1, 10) découpée comprend le lissage des stries de découpage (17) d'une zone de coupe lisse (15) de la surface de coupe (14).

4. Procédé de fabrication pour des plaques de chaîne (1, 10) selon l'une des revendications 1 à 3, **caractérisé en ce que** le lissage, à l'aide de l'agent chimique, de la ou des surfaces de coupe (14) de la plaque de chaîne (1, 10) découpée comprend le lissage des surfaces d'arrachement (18) d'une zone de rupture (16) de la zone de coupe (14).

5. Procédé de fabrication pour des plaques de chaîne (1, 10) selon l'une des revendications 1 à 4, **caractérisé en ce que** le lissage, à l'aide de l'agent chimique, de la ou des surfaces de coupe (14) de la plaque de chaîne (1, 10) découpée comprend une égalisation de la topographie de surface de la ou des surfaces de coupe (14).

6. Procédé de fabrication pour des plaques de chaîne (1, 10) selon l'une des revendications 1 à 5, **caractérisé en ce que** la plaque de chaîne (1, 10) est fabriquée à partir d'un acier, en particulier un acier au carbone.

7. Procédé de fabrication pour des plaques de chaîne (1, 10) selon l'une des revendications 1 à 6, **caractérisé en ce que** l'agent chimique est constitué par une solution oxydante acide de peroxydes, en particulier de peroxyde d'hydrogène, avec des acides minéraux, en particulier de l'hydrogénodifluorure d'ammonium, de l'acide fluorhydrique, de l'acide phosphorique ou de l'acide sulfurique, et des stabilisateurs, en particulier de l'urée ou un mélange d'urée et d'un ou plusieurs acides phosphoniques d'alcane.

8. Procédé de fabrication pour des plaques de chaîne (1, 10) selon l'une des revendications 1 à 7, **caractérisé en ce que** le traitement de la ou des surfaces de coupe (14) de la plaque de chaîne (1, 10) découpée se fait par immersion de ladite plaque (1, 10) dans un bain avec l'agent chimique.

9. Procédé de fabrication pour des plaques de chaîne (1, 10) selon l'une des revendications 1 à 8, **caractérisé en ce que** la durée limitée de l'exposition de la ou des surfaces de coupe (14) de la plaque de chaîne (1, 10) découpée à l'agent chimique est située entre 1 et 12 minutes, de préférence entre 2 et 6 minutes.

10. Procédé de fabrication pour des plaques de chaîne (1, 10) selon l'une des revendications 1 à 9, **caractérisé en ce que** la corrosion de la matière sur la surface de la ou des surfaces de coupe (14) atteint au moins 10 µm, de préférence au moins 15 µm.

11. Procédé de fabrication pour des plaques de chaîne (1, 10) selon l'une des revendications 1 à 9, avec les étapes supplémentaires de :
- nettoyage de la plaque de chaîne (1, 10) à l'aide d'un produit de nettoyage avant le traitement de la ou des surfaces de coupe (14) avec un agent chimique,
- lavage de la plaque de chaîne (1, 10) avec un produit repoussant l'eau, après l'élimination de l'agent chimique, et
- achèvement du procédé de fabrication.

12. Plaques de chaîne (1, 10) avec deux ouvertures d'articulation découpées (2) disposées aux extrémités opposées de la plaque de chaîne (1, 10), étant précisé que la surface de coupe (14) des ouvertures d'articulation découpées (2) est lissée avec un procédé de fabrication selon l'une des revendications 1 à 11 à l'aide de l'agent chimique.

13. Plaque de chaîne (1, 10) selon la revendication 12, **caractérisée en ce que** la plaque de chaîne (1, 10) est conçue comme une plaque dentée (1) avec deux dents qui dépassent d'un côté de ladite plaque dentée (1), étant précisé qu'à titre optionnel, la surface de coupe (14) des flancs extérieurs (6) et/ou des flancs intérieurs (8) et/ou de la surface de base (4) des dents soumis à l'usure est également lissée à l'aide de l'agent chimique.

14. Chaîne articulée, chaîne à douilles ou chaîne à dents qui est utilisée en particulier comme chaîne d'entraînement dans des moteurs à combustion interne, avec des plaques de chaîne (1, 10) selon la revendication 12 ou 13.
